(19) Europäisches Patentamt
European Patent Office
Office européen des brevets

(11) **EP 4 510 668 A1**

(12) **EUROPEAN PATENT APPLICATION**
published in accordance with Art. 153(4) EPC

(43) Date of publication:
**19.02.2025 Bulletin 2025/08**

(21) Application number: **23795140.5**

(22) Date of filing: **19.04.2023**

(51) International Patent Classification (IPC):
*H04W 16/06* (2009.01)   *H04W 72/04* (2023.01)

(52) Cooperative Patent Classification (CPC):
**H04W 16/06; H04W 28/02; H04W 72/04;
H04W 72/0457; H04W 72/1263; H04W 74/00**

(86) International application number:
**PCT/CN2023/089213**

(87) International publication number:
**WO 2023/207707 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210476538**

(71) Applicant: **Huawei Technologies Co., Ltd.
Shenzhen, Guangdong 518129 (CN)**

(72) Inventors:
• **GAO, Xiang**
**Shenzhen, Guangdong 518129 (CN)**
• **LIU, Xianda**
**Shenzhen, Guangdong 518129 (CN)**
• **LIU, Kunpeng**
**Shenzhen, Guangdong 518129 (CN)**
• **ZHANG, Zhening**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **CHANNEL SOUNDING REFERENCE SIGNAL TRANSMISSION METHOD AND COMMUNICATION DEVICE**

(57)    This application discloses a sounding reference signal transmission method and a communication apparatus. In the method, a network device sends configuration information of one or more SRS ports to a terminal device, where the configuration information indicates a sending occasion corresponding to the SRS port, each SRS port is in one-to-one correspondence with a receive antenna of the terminal device, and SRS transmit bandwidths corresponding to at least two of sending occasions corresponding to each SRS port are different; and the terminal device sends an SRS based on the SRS resource configuration information. Because transmit bandwidths for sending SRSs by the terminal device on different occasions are different, average power of an SRS with a small bandwidth on each RE can be large without increasing transmit power, to improve quality of receiving the SRS by the network device. In addition, because transmit bandwidths on only a part of sending occasions are reduced instead of all sending occasions, interference of the SRS sent by the terminal to an SRS sent by another terminal is not significant.

FIG. 5

## Description

### CROSS-REFERENCE TO RELATED APPLICATIONS

This application claims priority to Chinese Patent Application No. 202210476538.4, filed with the China National Intellectual Property Administration on April 29, 2022 and entitled "SOUNDING REFERENCE SIGNAL TRANSMISSION METHOD AND COMMUNICATION APPARATUS", which is incorporated herein by reference in its entirety.

### TECHNICAL FIELD

This application relates to the wireless communication field, and in particular, to a sounding reference signal transmission method and a communication apparatus.

### BACKGROUND

A sounding reference signal (sounding reference signal, SRS) is an uplink reference signal sent by user equipment (user equipment, UE) to a base station, and is used by the base station to obtain an uplink (uplink, UL) channel of the UE, or obtain a downlink (downlink, DL) channel of the UE based on channel reciprocity, so as to perform data scheduling on the UE based on channel information.

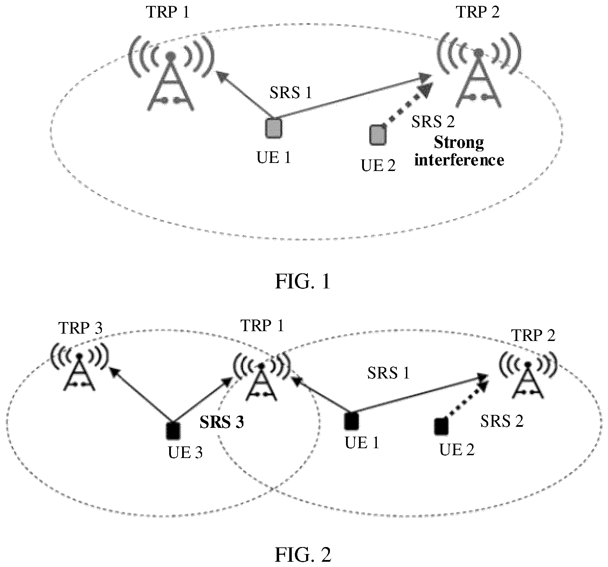

In a communication scenario shown in FIG. 1, a transmission and reception point (transmission and reception point, TRP) 1 is a serving base station of user equipment (user equipment, UE) 1, a TRP 2 is a cooperative base station of the UE 1, and both the TRP 1 and the TRP 2 can send data to the UE 1. In addition, the TRP 2 is a serving base station of UE 2, the TRP 1 is a cooperative base station of the UE 1, and both the TRP 2 and the TRP 1 can send data to the UE 2. Before sending the data to the UE 1, the TRP 1 and the TRP 2 may obtain information about channels from the UE 1 to the TRP 1 and the TRP 2 by using sounding reference signals (sounding reference signals, SRSs) sent by the UE 1, to send the data to the UE 1 based on the obtained channel information. A resource used by the UE 1 to send the SRS is usually configured by the serving base station of the UE 1, that is, configured by the TRP 1. Both the TRP 1 and the TRP 2 receive the SRS on the resource, to obtain the channel information.

However, a resource allocated by the TRP 1 to the UE 1 for sending the SRS may be the same as a resource allocated by the TRP 2 to the UE 2 for sending the SRS. Because the UE 2 may be center UE of the TRP 2, and the UE 1 may be edge UE of the TRP 2, reference signal received power (reference signal received power, RSRP) of the TRP 2 receiving an SRS 2 sent by the UE 2 may be far greater than RSRP of receiving an SRS 1 sent by the UE 1. Consequently, the SRS 2 causes strong interference to the SRS 1.

## SUMMARY

This application provides a sounding reference signal SRS transmission method and a communication apparatus, to resolve a problem of possible interference between SRSs sent by different terminals when a same SRS resource is configured for the different terminals.

According to a first aspect, an embodiment of this application provides an SRS transmission method, including: A terminal device receives configuration information of one or more SRS ports, where the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and the terminal device sends an SRS based on the configuration information of the SRS port.

In the foregoing method, SRS transmit bandwidths corresponding to at least two of sending occasions configured by a network device for the terminal device are different. Because the transmit bandwidths are different, average power of an SRS with a small bandwidth on each RE can be large without increasing transmit power, to improve quality of receiving the SRS by the network device. In addition, because transmit bandwidths on only a part of sending occasions are reduced instead of transmit bandwidths on all sending occasions, interference of the SRS sent by the terminal to an SRS sent by another terminal is not significant.

In a possible implementation, when the terminal device receives configuration information of a plurality of SRS ports, the plurality of SRS ports include a first SRS port set and a second SRS port set, SRS ports included in the first SRS port set and SRS ports included in the second SRS port set are respectively in one-to-one correspondence with the receive antennas of the terminal device, there is a one-to-one correspondence between the SRS ports in the first SRS port set and the SRS ports in the second SRS port set, the configuration information includes a first transmit bandwidth corresponding to the first SRS port set and a second transmit bandwidth corresponding to the second SRS port set, and the first transmit bandwidth is different from the second transmit bandwidth.

In a possible implementation, the configuration information of the SRS port indicates that the SRS port uses a non-frequency hopping non-repetition mode, the sending occasions include a first sending occasion and a second sending occasion, a transmit bandwidth on the first sending occasion is a first bandwidth, and a transmit bandwidth on the second sending occasion is a second bandwidth, where the first bandwidth is less than the second bandwidth.

In a possible implementation, the SRS resource configuration information indicates that the SRS uses a frequency hopping mode or repetition mode, a plurality of sending occasions in one frequency hopping periodicity or repetition periodicity include a first sending occasion and a second sending occasion, a transmit bandwidth on the first sending occasion is a first bandwidth, and a transmit bandwidth on the second sending occasion is a second bandwidth, where the first bandwidth is less than the second bandwidth.

In a possible implementation, the first sending occasion has different relative time positions in two adjacent frequency hopping periodicities or repetition periodicities; or the first sending occasion has a same relative time position but different frequency domain positions in two adjacent frequency hopping periodicities or repetition periodicities.

In a possible implementation, the first SRS port set and the second SRS port set include a same quantity of SRS ports, and a $Ki^{th}$ SRS port in the first SRS port set and a $Ki^{th}$ SRS port in the second SRS port set correspond to a same receive antenna.

According to a second aspect, an embodiment of this application provides an SRS transmission method, including: A first network device sends configuration information of one or more SRS ports to a terminal device, where the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and the first network device receives, based on the configuration information of the SRS port, an SRS sent by the terminal device.

In a possible implementation, when the first network device sends configuration information of a plurality of SRS ports to the terminal device, the plurality of SRS ports include a first SRS port set and a second SRS port set, SRS ports included in the first SRS port set and SRS ports included in the second SRS port set are respectively in one-to-one correspondence with the receive antennas of the terminal device, there is a one-to-one correspondence between the SRS ports in the first SRS port set and the SRS ports in the second SRS port set, the configuration information further includes transmit bandwidths respectively corresponding to the first SRS port set and the second SRS port set, and the transmit bandwidth corresponding to the first SRS port set is different from the transmit bandwidth corresponding to the second SRS port set.

In a possible implementation, the SRS resource configuration information indicates that the SRS port uses a non-frequency hopping non-repetition mode, the sending occasions include a first sending occasion and a second sending occasion, a transmit bandwidth on the first sending occasion is a first bandwidth, and a transmit bandwidth on the second sending occasion is a second bandwidth, where the first bandwidth is less than the second bandwidth.

In a possible implementation, the SRS resource configuration information indicates that the SRS uses a frequency hopping mode or repetition mode, a plurality of sending occasions in one frequency hopping periodicity or repetition periodicity include a first sending occasion and a second sending occasion, a transmit bandwidth on the first sending occasion is a first bandwidth, and a transmit bandwidth on the second sending occasion is a second bandwidth, where the first bandwidth is less than the second bandwidth.

In a possible implementation, the first sending occasion has different relative time positions in two adjacent frequency hopping periodicities or repetition periodicities; or the first sending occasion has a same relative time position but different frequency domain positions in two adjacent frequency hopping periodicities or repetition periodicities.

In a possible implementation, the first SRS port set and the second SRS port set include a same quantity of SRS ports, and a $Ki^{th}$ SRS port in the first SRS port set and a $Ki^{th}$ SRS port in the second SRS port set correspond to a same receive antenna.

In a possible implementation, the method further includes: The first network device sends the configuration information of the one or more SRS ports to a second network device, where the second network device is a cooperative network device of the terminal device.

According to a third aspect, an embodiment of this application provides an SRS transmission method, including: A second network device receives configuration information that is of one or more SRS ports of a first terminal device and that is sent by a first network device, where the first network device is a serving network device of the first terminal device, the second network device is a cooperative network device of the first terminal device, the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and the second network device configures, based on the configuration information of the SRS port, configuration information of an SRS port for a second terminal device.

According to a fourth aspect, this application provides a communication apparatus, where the apparatus includes modules/units for performing the method in any one of the first aspect to the third aspect and the possible implementations; and these modules/units may be implemented by hardware, or may be implemented by hardware executing corresponding software.

According to a fifth aspect, an embodiment of this application provides a communication apparatus, including a processor, and a memory and a communication interface that are separately coupled to the processor. The communication interface is configured to communicate with another device; and the processor is configured to: run instructions or a program in the memory, and perform, through the communication interface, the SRS transmission method according to any one of the first aspect to the third aspect and the possible implementations.

According to a sixth aspect, an embodiment of this application provides a computer-readable storage medium. The computer-readable storage medium stores computer-readable instructions, and when the computer-readable instructions are run on a computer, the method according to any one of the first aspect to the third aspect and the possible implementations is performed.

According to a seventh aspect, an embodiment of this application provides a computer program product including instructions. When the computer program product runs on a computer, the method according to any one of the first aspect to the third aspect and the possible implementations is performed.

**BRIEF DESCRIPTION OF DRAWINGS**

FIG. 1 is a diagram of a multi-TRP communication scenario;

FIG. 2 is a diagram of another multi-TRP communication scenario;

FIG. 3 is a diagram of an SRS comb number;

FIG. 4 is a diagram of an SRS frequency hopping bandwidth;

FIG. 5 is a schematic flowchart of an SRS transmission method according to an embodiment of this application;

FIG. 6 is a diagram of sending occasions configured for an SRS port according to an embodiment of this application;

FIG. 7 is another diagram of sending occasions configured for an SRS port according to an embodiment of this application;

FIG. 8 is a diagram of sending occasions in two frequency hopping periodicities according to an embodiment of this application;

FIG. 9 is a diagram of sending occasions in two repetition periodicities according to an embodiment of this application;

FIG. 10 is another diagram of sending occasions in two frequency hopping periodicities according to an embodiment of this application;

FIG. 11 is a diagram of sending occasions when a ratio of first sending occasions to all sending occasions is 0.5 according to an embodiment of this application;

FIG. 12 is a diagram of sending occasions corresponding to a first SRS port set and sending occasions corresponding to a second SRS port set according to an embodiment of this application;

FIG. 13 is another diagram of sending occasions corresponding to a first SRS port set and sending occasions corresponding to a second SRS port set according to an embodiment of this application;

FIG. 14 is a diagram of sending occasions corresponding to SRS ports of a first terminal device and a second terminal device according to an embodiment of this application;

FIG. 15 is a diagram of average power of SRSs sent by UE 1 and UE 2 on each RE according to an embodiment of this application;

FIG. 16 is a diagram of a structure of a communication apparatus according to an embodiment of this application; and

FIG. 17 is a diagram of a structure of another communication apparatus according to an embodiment of this application.

**DESCRIPTION OF EMBODIMENTS**

To solve a problem of SRS signal interference, power of sending an SRS by UE may be increased. For example, in a scenario shown in FIG. 1, to enable an SRS 1 sent by UE 1 to be better received by a TRP 2, transmit power of the UE 1 may be increased, to increase RSRP of receiving the SRS 1 by the TRP 2.

However, increasing the transmit power of the UE 1 may cause strong interference to other UE. For example, in a scenario shown in FIG. 2, in comparison with the scenario shown in FIG. 1, UE 3 and a TRP 3 are added. The TRP 3 is a serving base station of the UE 3, and the TRP 1 is a cooperative base station of the UE 3. When the UE 1 increases transmit power of the SRS 1, although the RSRP of the TRP 2 for the SRS 1 can be increased, RSRP of the TRP 1 for the SRS 1 is also increased. If the TRP 3 also allocates a same SRS resource to the UE 3, RSRP of the TRP 1 receiving the SRS 1 sent by the UE 1 is far greater than RSRP of receiving an SRS 3 sent by the UE 3. Consequently, the SRS 1 causes stronger interference to the SRS 3, reducing performance of the TRP 1 receiving the SRS 3.

In view of this, embodiments of this application provide an SRS transmission method and a communication apparatus, to resolve a problem of possible interference between SRSs sent by different terminals when a same SRS resource is configured for the different terminals. The method and the apparatus are based on a same technical concept. Because problem-resolving principles of the method and the apparatus are similar, mutual reference may be made to implementations of the apparatus and the method, and repeated descriptions are not described.

The SRS transmission method and the communication apparatus provided in embodiments of this application may be applied to a 4G communication system, may be applied to a 5G communication system, or may be applied to various future communication systems.

Specifically, the SRS transmission method and the communication apparatus provided in embodiments of this application may be applied to the multi-TRP scenarios shown in FIG. 1 and FIG. 2 in which a plurality of TRPs send data to a terminal device, to resolve a problem that an SRS 2 sent by the UE 2 causes interference to the SRS 1 sent by the UE 1, and the SRS 1 sent by the UE 1 causes interference to the SRS 3 sent by the UE 3. In addition, the SRS transmission method and the communication apparatus provided in embodiments of this application may also be applied to a single TRP communication scenario. To be specific, only a serving network device sends data to a terminal device, and there is no case in which a cooperative network device sends data to the terminal device. For example, if one TRP serves a large quantity of terminal devices, the TRP may allocate a same SRS resource to different terminal devices, and SRSs sent by the different terminal devices served by the TRP may also interfere with each other. In this case, the SRS transmission method provided in embodiments of this application may also be used to resolve an interference problem.

The network device in embodiments of this application is a node in a radio access network (radio access network, RAN), and may also be referred to as a base station, or may be referred to as a RAN node (or device). Currently, some examples of a network device 101 are: a next generation NodeB (next generation NodeB, gNB), a next generation evolved NodeB, a TRP, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The network device may alternatively be a satellite, and the satellite may also be referred to as a high-altitude platform, a high-altitude aircraft, or a satellite base station. The network device may alternatively be another device having a network device function. For example, the network device may alternatively be a device implementing a network device function in D2D communication. The network device may alternatively be a network device in a possible future communication system.

The terminal device in embodiments of this application is a device having a wireless transceiver function, and is connected to a radio access network in a wireless manner, to access a communication system. The terminal device may be referred to as user equipment (user equipment, UE), a mobile station (mobile station, MS), a mobile terminal (mobile terminal, MT), or the like. The terminal device may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal device in self driving (self driving), a wireless terminal device in a remote surgery, a wireless terminal device in a smart grid (smart grid), a wireless terminal device in transportation safety (transportation safety), a wireless terminal in a smart city (smart city), a wireless terminal in a smart home (smart home), a flight device (for example, an intelligent robot, a hot air balloon, an uncrewed aerial vehicle, an airplane), or the like.

When the network device configures SRS-related information for the terminal device, the following concepts may be involved.

SRS port: Each SRS resource configured by the network device includes $N_{ap}^{SRS} \in \{1, 2, 4, 8\}$ SRS ports. The SRS resource configured by the network device may also be referred to as configuration information of one or more SRS ports. For an SRS used for DL channel measurement, the network device needs to obtain channel information of each receive antenna of the terminal device. Therefore, each SRS port corresponds to one receive antenna of the terminal device. An antenna configuration of the terminal device includes two forms. One form is nTnR. To be specific, the terminal device includes n transmit antennas and n receive antennas. In this case, one SRS resource is usually configured to include n SRS ports, and each SRS port corresponds to each receive/transmit antenna. The other form is nTmR. To be specific, the terminal device includes n transmit antennas and m receive antennas. In this case, m/n SRS resources are usually configured, each SRS resource includes n SRS ports, and the m/n SRS resources may correspond to m UE receive antennas. Each SRS port corresponds to a specific time-frequency resource. In an ideal case, the SRS ports are orthogonal. Each SRS port corresponds to a physical antenna or a virtual antenna of UE.

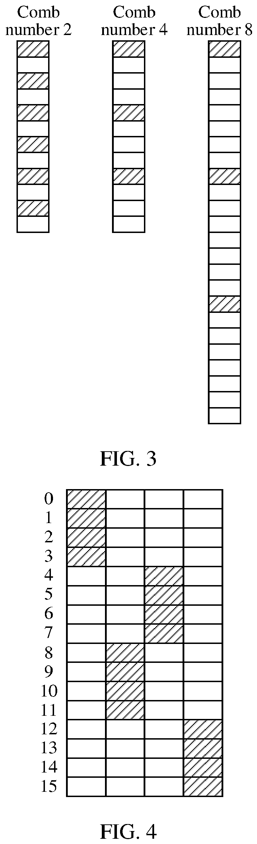

SRS comb (comb): Two REs of adjacent SRSs on one SRS comb are evenly spaced. A comb number $K_{TC}$ is preconfigured by radio resource control (radio resource control, RRC), and is usually set to 2, 4, or 8. As shown in FIG. 3, one grid represents one resource element (resource element, RE), and a dark grid represents an example of an RE position occupied by one comb at different comb numbers.

SRS scanning bandwidth and frequency hopping bandwidth: The SRS scanning bandwidth is a bandwidth range corresponding to obtaining a channel by the network device based on the SRS. For each SRS sending occasion, the terminal device may send the SRS by using the scanning bandwidth, or may send the SRS by using only a part of the scanning bandwidth. In this case, a bandwidth corresponding to one SRS sending occasion is the frequency hopping bandwidth, and the network device may obtain, by using SRSs sent on a plurality of SRS sending occasions, channel information corresponding to the SRS scanning bandwidth. For example, in the example shown in FIG. 4, a length of each grid in a vertical direction represents a bandwidth of one resource block (resource block, RB) in frequency domain, the SRS scanning bandwidth is a bandwidth of 16 RBs, and the SRS frequency hopping bandwidth is a bandwidth of four RBs, to be specific, a bandwidth of an SRS sent on each sending occasion is a bandwidth of four RBs.

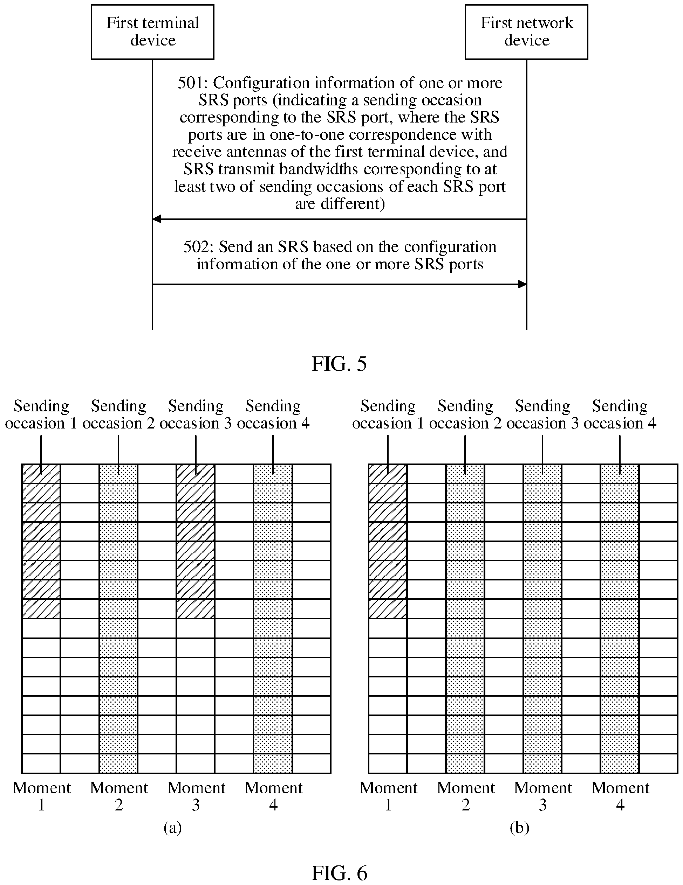

FIG. 5 is a schematic flowchart of an SRS transmission method according to an embodiment of this application. As shown in the figure, the method may include the following steps.

Step 501: A first network device sends configuration information of one or more SRS ports to a first terminal device.

Correspondingly, the first terminal device receives the configuration information of the one or more SRS ports that is sent by the first network device.

The first network device is a serving network device of the first terminal device. For example, if the first terminal device is the UE 1 in FIG. 1 and FIG. 2, the first network device is the TRP 1 in FIG. 1 and FIG. 2; or if the first terminal device is the UE 2 in FIG. 1 and FIG. 2, the first network device is the TRP 2 in FIG. 1 and FIG. 2.

An SRS port of an SRS port configured by the first network device for the terminal device indicates a sending occasion corresponding to the one or more SRS ports, and the sending occasion may indicate a time-frequency position at which the terminal device sends an SRS. Specifically, the SRS ports are in one-to-one correspondence with receive antennas of the first terminal device. For example, the terminal device includes a receive antenna 1, a receive antenna 2, a receive antenna 3, and a receive antenna 4, and configuration information of the SRS port configured by the network device includes configuration information of an SRS port 1, an SRS port 2, an SRS port 3, and an SRS port 4. The SRS port 1 corresponds to the receive antenna 1, the SRS port 2 corresponds to the receive antenna 2, the SRS port 3 corresponds to the receive antenna 3, and the SRS port 4 corresponds to the receive antenna 4.

Optionally, the one or more SRS ports in the foregoing step belong to one SRS resource or SRS resource set, or belong to one SRS port set, and SRS ports in the SRS resource, the SRS resource set, or the SRS port set correspond to different receive antennas. Configuration information of each SRS port includes a sending occasion on which the SRS port sends an SRS. SRS transmit bandwidths of at least two of sending occasions of each SRS port are different.

For example, an SRS scanning bandwidth is a bandwidth of 16 RBs. When the terminal device sends the SRS based on the scanning bandwidth, one SRS port of the terminal device may include a sending occasion whose transmit bandwidth is a bandwidth of 16 RBs and a sending occasion whose transmit bandwidth is a bandwidth of eight RBs; or when the terminal device sends the SRS based on a frequency hopping bandwidth (the scanning bandwidth is divided into four frequency hopping bandwidths), one SRS port of the terminal device may include a sending occasion whose transmit bandwidth is a bandwidth of four RBs and a sending occasion whose transmit bandwidth is a bandwidth of two RBs.

In this manner, for one SRS port, there are sending occasions with different power spectral densities. Therefore, in a cooperative scenario, when a serving network device and a cooperative network device simultaneously receive an SRS of the SRS port, both the serving network device and the cooperative network device obtain good receiving performance. For example, the cooperative network device may receive an SRS with a large power spectral density, to improve a signal to interference plus noise ratio (signal to interference plus noise ratio, SINR) of the SRS. In addition, the serving network device may further improve a time domain resolution of channel estimation by using an SRS with a large transmit bandwidth, and supplement an SRS signal with a small transmit bandwidth by using a difference method.

Step 502: The first terminal device sends the SRS based on the configuration information of the one or more SRS ports.

Correspondingly, the first network device receives the SRS based on the configuration information of the one or more SRS ports, so that the first network device obtains channel information of the first terminal device based on the received SRS.

Optionally, the one or more SRS ports in the foregoing embodiment may be used to obtain a downlink channel. For example, in a TDT system, the first network device may derive downlink channel information based on obtained uplink channel information, and further perform downlink transmission with the first terminal device.

In a possible implementation, the first network device may indicate, by using the configuration information of the SRS port, that the first terminal device sends the SRS in a non-frequency hopping non-repetition mode. A non-frequency hopping mode indicates that a transmit bandwidth of each SRS sent by the first terminal device is the scanning bandwidth. A repetition mode indicates that SRSs are sent on a plurality of consecutive symbols, SRSs on the plurality of consecutive symbols occupy a same subcarrier position, and transmit antennas are the same. The network device may average SRS signals on a plurality of OFDM symbols, to improve an SNR of receiving the SRSs. Optionally, each SRS sending periodicity includes the plurality of OFDM symbols for sending the SRSs in the repetition mode. A non-repetition mode is sending the SRS on only one symbol at a time. It should be understood that, for the non-repetition mode, SRSs on a plurality of consecutive OFDM symbols occupy different subcarrier positions, and transmit antennas are different.

In this case, the sending occasion indicated by the configuration information of each SRS port configured by the first network device includes a first sending occasion and a second sending occasion. A transmit bandwidth corresponding to the first sending occasion is a first bandwidth, a transmit bandwidth of the second sending occasion is a second bandwidth, and the first bandwidth is less than the second bandwidth.

For example, if the scanning bandwidth is a bandwidth of 16 RBs, a transmit bandwidth corresponding to a normal SRS sending occasion is a bandwidth of 16 RBs. Sending occasions configured by the first network device for each SRS port of the first terminal may be shown in FIG. 6. A length of each grid in a vertical direction represents a bandwidth of one RB in frequency domain, and a length in a horizontal direction represents duration of one symbol. In an example shown in (a) in FIG. 6, transmit bandwidths corresponding to a sending occasion 1 and a sending occasion 3 at a moment 1 and a moment 3 are bandwidths of eight RBs, and transmit bandwidths corresponding to a sending occasion 2 and a sending occasion 4 at a moment 2 and a moment 4 are bandwidths of 16 RBs. The sending occasion 1 and the sending occasion 3 are the foregoing first sending occasion, and the sending occasion 2 and the sending occasion 4 are the foregoing second sending occasion. In an example shown in (b) in FIG. 6, a transmit bandwidth corresponding to a sending occasion 1 at a moment 1 is a bandwidth of eight RBs, and transmit bandwidths corresponding to a sending occasion 2, a sending occasion 3, and a sending occasion 4 at a moment 2, a moment 3, and a moment 4 are bandwidths of 16 RBs. The sending occasion 1 is the foregoing first sending occasion, and the sending occasion 2, the sending occasion 3, and the sending occasion 4 are the foregoing second sending occasion.

Although in the examples shown in FIG. 6, different sending occasions are evenly spaced by one symbol, this is not limited in this embodiment of this application. The sending occasions may be spaced by one symbol, may be spaced by a plurality of symbols, or may not be spaced (this is equivalent to the repetition mode). In addition, the network device may alternatively indicate that the terminal device aperiodically sends the SRS. In other words, different intervals may include different quantities of symbols.

In another possible implementation, the first network device may indicate, by using the configuration information of the SRS port, that the first terminal device sends the SRS in a frequency hopping mode or a repetition mode. A sending occasion in a frequency hopping periodicity or a repetition periodicity includes a first sending occasion and a second sending occasion. A transmit bandwidth corresponding to the first sending occasion is a first bandwidth, a transmit bandwidth corresponding to the second sending occasion is a second bandwidth, and the first bandwidth is less than the second bandwidth. In a frequency hopping mode, the scanning bandwidth is divided into M frequency hopping bandwidths. The terminal device sends channel information of one frequency hopping bandwidth to the network device each time by using the SRS, and may send all channel information of the scanning bandwidth to the network device by sending M SRSs. In this case, the M SRSs are one frequency hopping periodicity. In the repetition mode, if the terminal device continuously sends SRSs on N symbols, the N SRSs are one repetition periodicity.

It should be understood that for sending the SRS in the frequency hopping mode, a sending occasion of each SRS corresponds to a part of the scanning bandwidth. Sending occasions of all SRSs in one SRS frequency hopping periodicity may correspond to a complete scanning bandwidth.

Optionally, an SRS transmit bandwidth includes a plurality of frequency domain units, and at least one subcarrier in each frequency domain unit is occupied by the SRS.

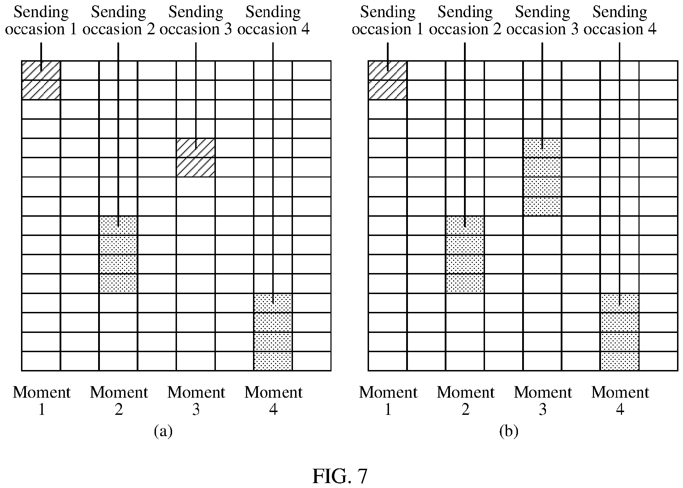

For example, if the scanning bandwidth is a bandwidth of 16 RBs, and the frequency hopping bandwidth is a bandwidth of four RBs, after the frequency hopping mode is used, a transmit bandwidth corresponding to a normal SRS sending occasion is a bandwidth of four RBs. Sending occasions configured by the first network device for each SRS port of the first terminal may be shown in FIG. 7. A length of each grid in a vertical direction represents a bandwidth of one RB in frequency domain, and a length in a horizontal direction represents duration of one symbol. In one frequency hopping periodicity shown in (a) in FIG. 7, transmit bandwidths corresponding to a sending occasion 1 and a sending occasion 3 at a moment 1 and a moment 3 are bandwidths of two RBs, and transmit bandwidths corresponding to a sending occasion 2 and a sending occasion 4 at a moment 2 and a moment 4 are normal bandwidths of four RBs. The sending occasion 1 and the sending occasion 3 are the foregoing first sending occasion, and the sending occasion 2 and the sending occasion 4 are the foregoing second sending occasion. In an example shown in (b) in FIG. 7, a transmit bandwidth corresponding to a sending occasion 1 at a moment 1 is a bandwidth of two RBs, and transmit bandwidths corresponding to a sending occasion 2, a sending occasion 3, and a sending occasion 4 at a moment 2, a moment 3, and a moment 4 are normal bandwidths of four RBs. The sending occasion 1 is the foregoing first sending occasion, and the sending occasion 2, the sending occasion 3, and the sending occasion 4 are the foregoing second sending occasion.

Optionally, a comb number corresponding to the first sending occasion is different from a comb number corresponding to the second sending occasion.

It should be understood that, although only the first sending occasion and the second sending occasion are used as examples in the foregoing examples, in actual application, the configuration information of the SRS port may also indicate more sending occasions, for example, the first sending occasion, the second sending occasion, and a third sending occasion. The transmit bandwidth corresponding to the first sending occasion is less than the transmit bandwidth corresponding to the second sending occasion, and the transmit bandwidth corresponding to the second sending occasion is less than a transmit bandwidth corresponding to the third sending occasion.

Because the transmit bandwidth corresponding to the first sending occasion is less than a transmit bandwidth in a case in which this embodiment of this application is not applied, channel information included in the first sending occasion in this embodiment of this application is less than channel information in the case in which this embodiment of this application is not applied. However, the network device may estimate, based on received channel information, channel information that is not included, to easily obtain complete channel information. For example, in a scenario shown in (a) in FIG. 7, the bandwidth of the sending occasion 1 is a bandwidth of two RBs (assumed to be an RB 1 and an RB 2). However, when this embodiment of this application is not used, a transmit bandwidth corresponding to a sending occasion at this position should be four RBs (assumed to be the RB 1, the RB 2, an RB 3, and an RB 4). Therefore, an SRS sent on the sending occasion 1 does not include channel information corresponding to the RB3 and the RB4, but the network device may estimate the channel information corresponding to the RB 3 and the RB 4 based on channel information corresponding to the RB 1 and the RB 2.

(a) in FIG. 7 is used as an example. If the SRS is sent on a 1st sending occasion in each frequency hopping periodicity by using a small bandwidth, the network device can never directly obtain the channel information corresponding to the RB 3 and the RB 4, but always obtains the channel information through algorithm estimation. However, there may be a difference between the channel information obtained through estimation and channel information directly reported by the terminal device. Therefore, the network device cannot obtain accurate channel information corresponding to the RB 3 and the RB 4. To further improve accuracy of the channel information obtained by the network device, relative time positions of the first sending occasion in two adjacent frequency hopping periodicities may be different, or frequency domain positions of the first sending occasion in two adjacent frequency hopping periodicities may be different.

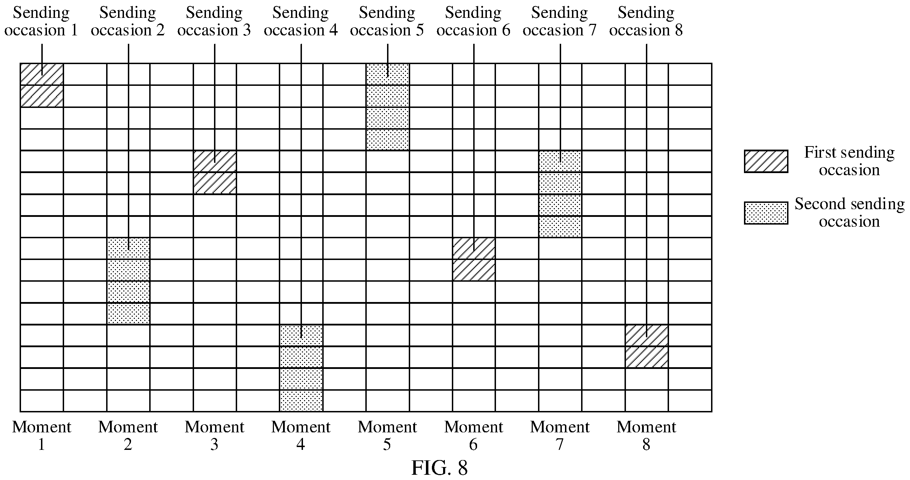

For example, FIG. 8 shows an example of a diagram of sending occasions in two frequency hopping periodicities. A sending occasion 1, a sending occasion 2, a sending occasion 3, and a sending occasion 4 belong to a frequency hopping periodicity 1, and a sending occasion 5, a sending occasion 6, a sending occasion 7, and a sending occasion 8 belong to a frequency hopping periodicity 2. The frequency hopping periodicity 1 includes two first sending occasions: the sending occasion 1 and the sending occasion 3. The frequency hopping periodicity 2 includes two first sending occasions:

the sending occasion 6 and the sending occasion 8. It can be learned that relative time positions of the sending occasion 6 and the sending occasion 8 in the frequency hopping periodicity 2 are different from relative time positions of the sending occasion 1 and the sending occasion 3 in the frequency hopping periodicity 1. A relative time position of the sending occasion 5 in the frequency hopping periodicity 2 is the same as a relative time position of the sending occasion 1 in the frequency hopping periodicity 1. However, the sending occasion 5 is not the first sending occasion in the foregoing embodiment, and a transmit bandwidth of the sending occasion 5 is a normal frequency hopping bandwidth. Therefore, an SRS sent on the sending occasion includes channel information corresponding to an RB 1 to an RB 4, and compensates for a problem that an SRS sent on the sending occasion 1 does not include the channel information corresponding to the RB 3 and the RB 4. Similarly, an SRS sent on the sending occasion 7 includes channel information corresponding to an RB 5 to an RB 8, and compensates for a problem that an SRS sent on the sending occasion 3 does not include the channel information corresponding to the RB 7 and the RB 8.

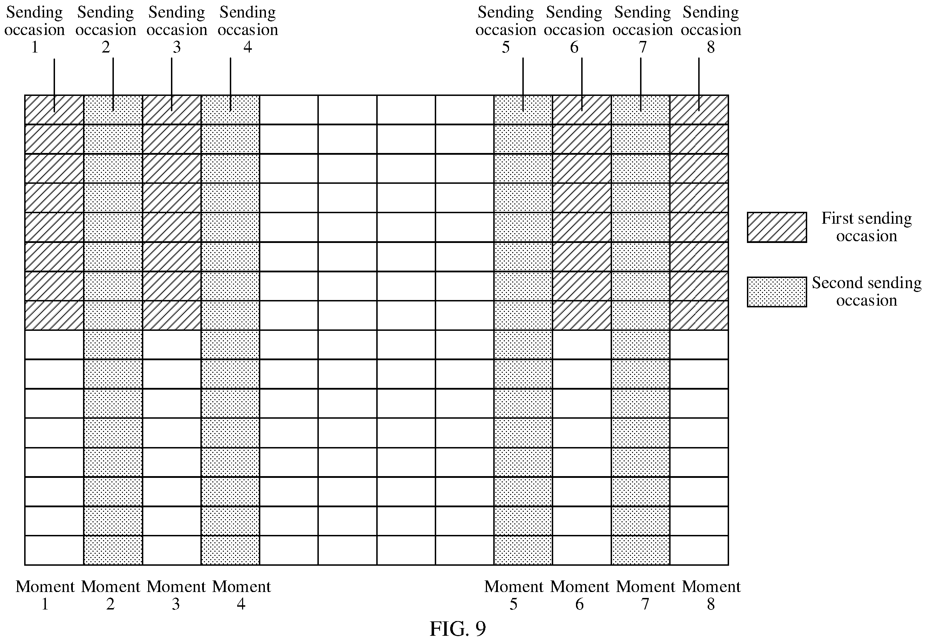

For another example, FIG. 9 shows an example of a diagram of sending occasions in two repetition periodicities. Each repetition periodicity includes four consecutive symbols, a sending occasion 1, a sending occasion 2, a sending occasion 3, and a sending occasion 4 belong to a repetition periodicity 1, and a sending occasion 5, a sending occasion 6, a sending occasion 7, and a sending occasion 8 belong to a repetition periodicity 2. The repetition periodicity 1 includes two first sending occasions: the sending occasion 1 and the sending occasion 3. The repetition periodicity 2 includes two first sending occasions: the sending occasion 6 and the sending occasion 8. It can be learned that relative time positions of the sending occasion 6 and the sending occasion 8 in the repetition periodicity 2 are different from relative time positions of the sending occasion 1 and the sending occasion 3 in the repetition periodicity 1. A relative time position of the sending occasion 5 in the repetition periodicity 2 is the same as a relative time position of the sending occasion 1 in the repetition periodicity 1. However, the sending occasion 5 is not the first sending occasion in the foregoing embodiment, and a transmit bandwidth of the sending occasion 5 is a normal scanning bandwidth. Therefore, an SRS sent on the sending occasion includes channel information corresponding to an RB 1 to an RB 16, and compensates for a problem that an SRS sent on the sending occasion 1 does not include the channel information corresponding to the RB 9 to the RB 16. Similarly, an SRS sent on the sending occasion 7 includes the channel information corresponding to the RB 1 to an RB 16, and compensates for a problem that an SRS sent on the sending occasion 3 does not include the channel information corresponding to the RB 7 and the RB 8.

Optionally, in the repetition mode, transmit bandwidths of SRS sending occasions of one SRS port in one repetition periodicity are the same. There are two repetition periodicities, which respectively correspond to the first sending occasion and the second sending occasion.

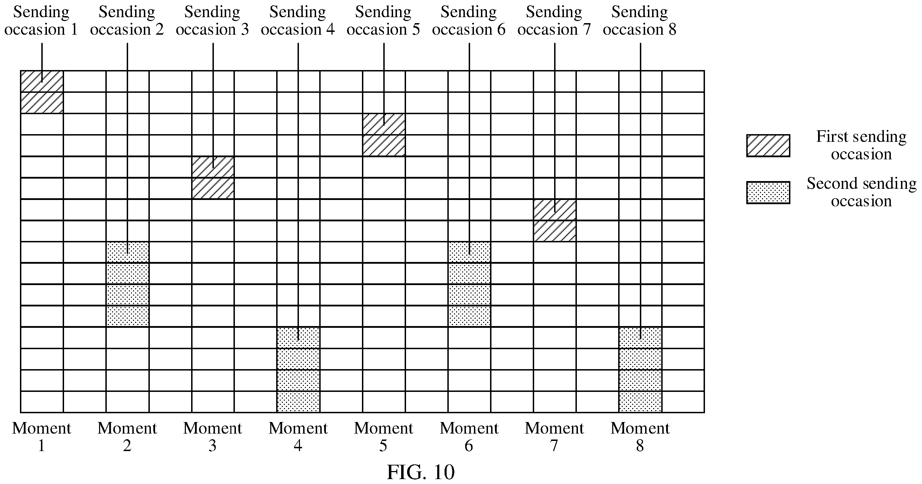

For another example, FIG. 10 shows an example of a diagram of sending occasions in two frequency hopping periodicities. A sending occasion 1, a sending occasion 2, a sending occasion 3, and a sending occasion 4 belong to a frequency hopping periodicity 1, and a sending occasion 5, a sending occasion 6, a sending occasion 7, and a sending occasion 8 belong to a frequency hopping periodicity 2. The frequency hopping periodicity 1 includes two first sending occasions: the sending occasion 1 and the sending occasion 3. The frequency hopping periodicity 2 also includes two sending occasions: the sending occasion 5 and the sending occasion 7. A relative time position of the sending occasion 5 in the frequency hopping periodicity 2 is the same as a relative time position of the sending occasion 1 in the frequency hopping periodicity 1, but frequency domain positions of the sending occasion 5 and the sending occasion 1 are different. A frequency domain range corresponding to the sending occasion 1 and a frequency domain range corresponding to the sending occasion 5 can cover a range of one frequency hopping bandwidth, and an SRS sent on the sending occasion 5 can compensate for a problem that an SRS sent on the sending occasion 1 does not include channel information corresponding to an RB 3 and an RB 4. Similarly, the sending occasion 7 can also compensate for a problem that an SRS sent on the sending occasion 3 does not include channel information corresponding to an RB 7 and an RB 8.

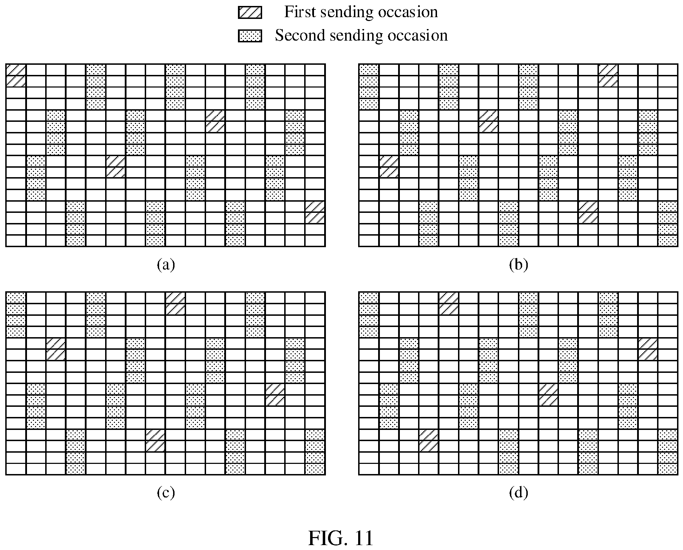

Optionally, the configuration information that is of the SRS port and that is sent by the first network device may further include a ratio of the first sending occasion to all sending occasions. A quantity of first sending occasions and a quantity of second sending occasions in embodiments shown in FIG. 6 and FIG. 7 to FIG. 10 are used as an example. Therefore, the ratio of the first sending occasion to all sending occasions is 0.5. The ratio may alternatively be another value, for example, may alternatively be 0.25. In an embodiment shown in FIG. 11, that the scanning bandwidth is divided into four frequency hopping bandwidths is still used as an example. When the ratio of the first sending occasion to all sending occasions is 0.25, diagrams of the first sending occasions and the second sending occasions may be shown by (a), (b), (c) and (d) in FIG. 11. It should be understood that FIG. 11 shows only some embodiments. In actual application, there are other embodiments that are not shown in the figure and that are of the first sending occasions and the second sending occasions when the ratio is 0.25. This is not limited in this application. In addition, in addition to 0.5 and 0.25, the ratio of the first sending occasion to all sending occasions may be another value, and examples are not given herein one by one.

It should be understood that, although an example in which the bandwidth corresponding to the first sending occasion is half of the bandwidth corresponding to the second sending occasion is used in the foregoing embodiments, in actual application, the bandwidth corresponding to the first sending occasion only needs to be less than the bandwidth corresponding to the second sending occasion, a bandwidth ratio of the first sending occasion to the second sending occasion does not need to be limited, and a bandwidth difference between the first sending occasion and the second sending occasion does not need to be limited either.

In the foregoing embodiments, the one or more SRS ports configured by the first network device for the first terminal device belong to one SRS resource or SRS resource set, or belong to one SRS port set, and each SRS port corresponds to a same sending occasion. That is, one SRS resource is actually configured. However, in another implementation of this application, the one or more SRS ports configured by the first network device for the first terminal device may correspond to different SRS resources, correspond to different SRS resource sets, or belong to different SRS port sets, and different SRS resources are configured for different SRS port sets.

In a possible design, a plurality of SRS ports configured for the terminal device include a first SRS port set and a second SRS port set. Correspondingly, in step 501, the configuration information that is of the SRS port and that is sent by the first network device includes configuration information of the first SRS port set and configuration information of the second SRS port set. The configuration information of the first SRS port set includes a first transmit bandwidth corresponding to the first SRS port set, the configuration information of the second SRS port set includes a second transmit bandwidth corresponding to the second SRS port set, and the first transmit bandwidth is different from the second transmit bandwidth.

One or more SRS ports included in the first SRS port set are in one-to-one correspondence with receive antennas of the terminal device, one or more SRS ports included in the second SRS port set are also in one-to-one correspondence with the receive antennas of the terminal device, and the SRS ports in the first SRS port set are in one-to-one correspondence with the SRS ports in the second SRS port set.

That the SRS ports in the first SRS port set are in one-to-one correspondence with the SRS ports in the second SRS port set may indicate that a quantity of SRS ports included in the first SRS port set is the same as a quantity of SRS ports included in the second SRS port set, and for any SRS port Ki in the first SRS port set, there is an SRS port Lj in the second SRS port set corresponding to a same receive antenna as the SRS port Ki. For example, the terminal device includes a receive antenna 1, a receive antenna 2, a receive antenna 3, and a receive antenna 4. The first SRS port set includes an SRS port K1, an SRS port K2, an SRS port K3, and an SRS port K4, and the second SRS port set includes an SRS port J1, an SRS port J2, an SRS port J3, and an SRS port J4. Both the SRS port K1 and the SRS port J1 correspond to the receive antenna 1, both the SRS port K2 and the SRS port J2 correspond to the receive antenna 2, both the SRS port K3 and the SRS port J3 correspond to the receive antenna 3, and both the SRS port K4 and the SRS port J4 correspond to the receive antenna 4.

In a specific embodiment, it is assumed that a transmit bandwidth configured by the first network device for the first SRS port set is a first bandwidth, a transmit bandwidth configured for the second SRS port set is a second bandwidth, and the first bandwidth is less than the second bandwidth.

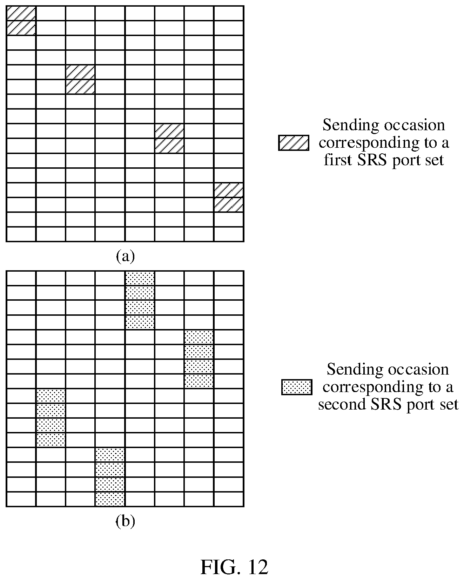

For example, sending occasions corresponding to the first SRS port set and sending occasions corresponding to the second SRS port set may be shown in FIG. 12. The SRS port K1 in the first SRS port set sends an SRS on a sending occasion shown in (a) in FIG. 12, and the SRS port J1 in the second SRS port set sends an SRS on a sending occasion shown in (b) in FIG. 12. Because the SRS port K1 and the SRS port J1 correspond to the same antenna, sending occasions corresponding to the antenna is a superposition of (a) in FIG. 12 and (b) in FIG. 12, and a diagram of sending occasions is obtained as shown in FIG. 8.

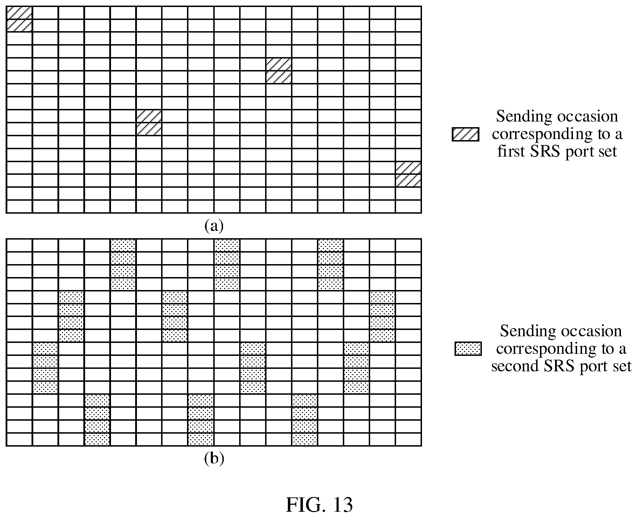

For another example, sending occasions corresponding to the first SRS port set and sending occasions corresponding to the second SRS port set may alternatively be shown in FIG. 13. The SRS port K1 in the first SRS port set sends an SRS on a sending occasion shown in (a) in FIG. 13, and the SRS port J1 in the second SRS port set sends an SRS on a sending occasion shown in (b) in FIG. 13. Because the SRS port K1 and the SRS port J1 correspond to the same antenna, sending occasions corresponding to the antenna is a superposition of (a) in FIG. 13 and (b) in FIG. 13, and a diagram of sending occasions is obtained as shown in (a) in FIG. 11.

Optionally, partial sounding (partial sounding) may be performed on the sending occasion corresponding to the first SRS port set, and full sounding (full sounding) may be performed on the sending occasion corresponding to the second SRS port set, to implement joint filtering and reduce delay impact. Specifically, the partial sounding means that the SRS transmit bandwidth is less than the SRS scanning bandwidth. The scanning bandwidth is divided into N frequency domain units, at least one subcarrier in each of the N frequency domain units is occupied by the SRS, and all frequency domain resources occupied by the SRS in the N frequency domain units are the SRS transmit bandwidth. For example, the SRS scanning bandwidth is a bandwidth of N RBs, and the transmit bandwidth is N/2 RBs. However, the transmit bandwidth is distributed in the entire scanning bandwidth, and is not necessarily distributed only in one frequency hopping bandwidth, so that a large bandwidth can be scanned by using a small quantity of SRS resources.

In an implementation in which different SRS port sets are configured for the terminal device and the different SRS port sets correspond to different transmit bandwidths, more flexible power allocation and SRS resource allocation manners can be brought. In addition, for a same receive antenna, the network device may perform joint sounding on sending occasions of SRS ports that are in the first SRS port set and that correspond to the receive antenna and sending occasions of SRS ports that are in the second SRS port set and that correspond to the receive antenna, to improve comprehensiveness and accuracy of obtaining channel information by the network device.

It should be understood that the plurality of SRS ports configured for the terminal device may further include more SRS port sets, for example, include the first SRS port set, the second SRS port set, and a third SRS port set. The first transmit bandwidth configured for the first SRS port set is less than the second transmit bandwidth configured for the second SRS port set, and the second transmit bandwidth is less than a third transmit bandwidth configured for the third SRS port set.

In a possible implementation, in a communication scenario similar to that in which a plurality of network devices cooperate with each other shown in FIG. 2, before step 502, the first network device may further send, to a second network device, the configuration information of the one or more SRS ports configured for the first terminal device, where the second network device is a cooperative network device of the first terminal device. For example, if the first terminal device is the UE 1 in FIG. 1 and FIG. 2, and the first network device is the TRP 1 in FIG. 1 and FIG. 2, the second network device is the TRP 2 in FIG. 1 and FIG. 2; or if the first terminal device is the UE 2 in FIG. 1 and FIG. 2, and the first network device is the TRP 2 in FIG. 1 and FIG. 2, the second network device is the TRP 1 in FIG. 1 and FIG. 2.

In this case, corresponding to step 502, the second network device also receives the SRS based on the configuration information of the one or more SRS ports, so that the second network device can also obtain the channel information of the first terminal device based on the SRS sent by the first terminal device.

Further, the foregoing method may further include step 503: The first network device and/or the second network device configure/configures configuration information of an SRS port for another terminal device based on the configuration information of the one or more SRS ports. Step 503 may be performed before or after step 502.

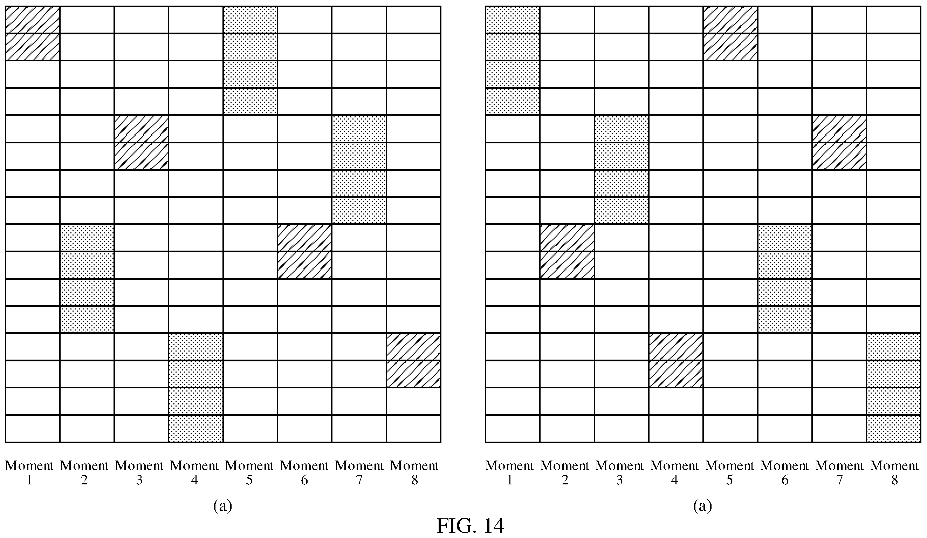

Specifically, if the second network device allocates an SRS resource the same as that of the first terminal device to a second terminal device when configuring the configuration information of the SRS port for the second terminal device, in other words, a sending occasion for sending an SRS by the second terminal device overlaps the sending occasion for sending the SRS by the first terminal device in both time frequency and frequency domain, the second network device may configure, for the second terminal device on all or some sending occasions on which time-frequency resources overlap, a transmit bandwidth different from that of the first terminal device. For example, in an example shown in FIG. 14, the sending occasions corresponding to the SRS ports configured by the first network device for the first terminal may be shown in (a) in FIG. 14, and sending occasions corresponding to SRS ports configured by the second network device for the second terminal may be shown in (b) in FIG. 14.

After the foregoing method is used, although the first terminal device and the second terminal device simultaneously send SRSs, and frequency domain resources also overlap, because the SRSs sent by the first terminal device and the second terminal device occupy different bandwidths, average power of the two SRSs on each RE is different, that is, power spectral densities of the two SRSs are different. It is assumed that at a first moment, an SRS transmit bandwidth configured by the second network device for the second terminal device is greater than an SRS transmit bandwidth of the first terminal device. In this case, average power of an SRS 1 sent by the first terminal device on each RE is greater than average power of an SRS 2 sent by the second terminal device on each RE, and at the first moment, the second network device can receive the SRS 1 with good quality. However, at a second moment, the SRS transmit bandwidth configured by the second network device for the second terminal device is less than the SRS transmit bandwidth of the first terminal device. In this case, the average power of the SRS 1 sent by the first terminal device on each RE is less than the average power of the SRS 2 sent by the second terminal device on each RE, and at the second moment, the second network device can receive the SRS 2 with good quality. Therefore, the second network device can both receive the SRS sent by the first terminal device with good quality, to obtain the channel information of the first terminal device; and receive the SRS sent by the second terminal device with good quality, to obtain channel information of the second terminal device.

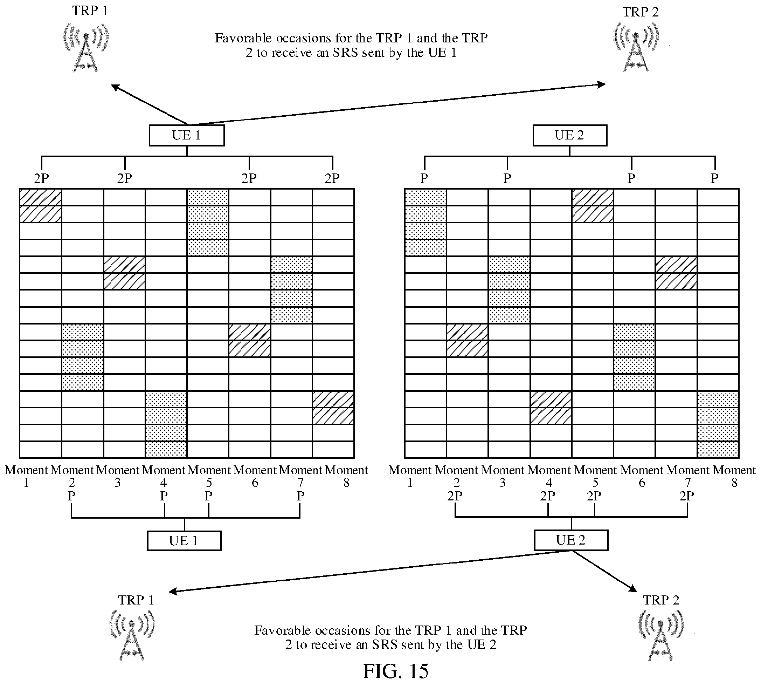

For example, if total power of sending SRSs by UE 1 and UE 2 is 4P, in the example of the sending occasions shown in FIG. 14, average power of each SRS on each RE may be shown in FIG. 15. At a moment 1, a moment 3, a moment 6, and a moment 8, average power of an SRS sent by the UE 1 on each RE is 2P, and average power of an SRS sent by the UE 2 on each RE is P. Therefore, at these moments, it helps a TRP 1 and a TRP 2 receive the SRS sent by the UE 1. At a moment 2, a moment 4, a moment 5, and a moment 7, average power of the SRS sent by the UE 1 on each RE is P, and average power of the SRS sent by the UE 2 on each RE is 2P. Therefore, at these moments, it helps the TRP 1 and the TRP 2 receive the SRS sent by the UE 2.

Similarly, the first network device may also allocate, to another terminal device served by the first network device, the SRS resource the same as that of the first terminal device. In this case, when configuring configuration information of an SRS port for the another terminal, the first network device may perform configuration with reference to the foregoing method for configuring the configuration information of the SRS port by the second network device, to ensure that not only the SRS sent by the first terminal device with good quality can be received and the channel information of the first terminal device can be obtained, but also an SRS sent by the another terminal device with good quality can be received and channel information of the another terminal device can be obtained.

In the foregoing embodiments of this application, SRS transmit bandwidths corresponding to at least two of the sending occasions configured by the network device for the terminal device are different. Because the transmit bandwidths are different, average power of an SRS with a small bandwidth on each RE can be large without increasing transmit power, to improve quality of receiving the SRS by the network device. In addition, because transmit bandwidths on only a part of sending occasions are reduced instead of transmit bandwidths on all sending occasions, interference of the SRS sent by the terminal to an SRS sent by another terminal is not significant.

In addition, in addition to reducing, by configuring different bandwidths, interference between SRSs sent by different terminals, the interference between the SRSs sent by different terminals may be further reduced by configuring different transmit powers. For example, the first network device configures configuration information of one or more SRS ports for the terminal device, where the configuration information indicates sending occasions corresponding to the one or more SRS ports, the SRS ports are in one-to-one correspondence with receive antennas of the terminal device, and SRS transmit power corresponding to at least two of the sending occasions of each SRS port is different, so that the terminal device sends an SRS based on the configuration information of the SRS port. Correspondingly, a limitation that the transmit bandwidth corresponding to the first sending occasion is less than the transmit bandwidth corresponding to the second sending occasion in the foregoing embodiment is replaced with that transmit power corresponding to the first sending occasion is greater than transmit power corresponding to the second sending occasion. Alternatively, a limitation that the first transmit bandwidth corresponding to the first SRS port set is less than the second transmit bandwidth corresponding to the second SRS port set in the foregoing embodiment is replaced with that first transmit power corresponding to the first SRS port set is greater than second transmit power corresponding to the second SRS port set.

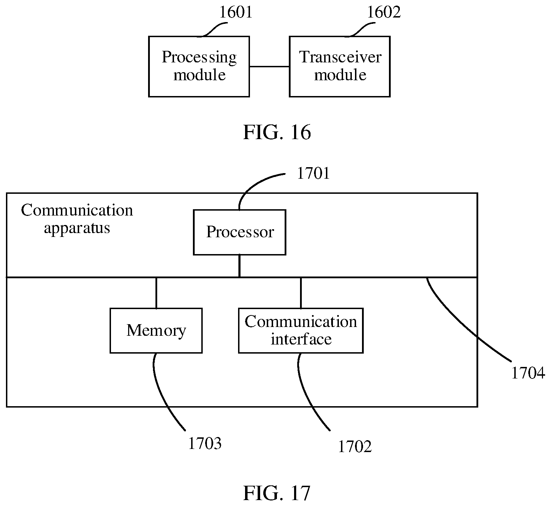

FIG. 16 is a diagram of a communication apparatus according to an embodiment of this application. The communication apparatus includes a processing module 1601 and a transceiver module 1602. The processing module 1601 is configured to enable the communication apparatus to process data. The transceiver module 1602 is configured to perform information receiving and sending processing in the foregoing method embodiments. It should be understood that the processing module 1601 in this embodiment of this application may be implemented by a processor or a processor-related circuit component (or referred to as a processing circuit), and the transceiver module 1602 may be implemented by a receiver or a receiver-related circuit component, or a transmitter or a transmitter-related circuit component.

For example, the communication apparatus may be a communication apparatus device, or may be a chip used in the communication apparatus device, or another combined device or component that has a function of the foregoing communication apparatus device.

When the communication apparatus is a first terminal device, the transceiver module 1602 is configured to receive configuration information of one or more SRS ports, where the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different. The processing module 1601 is configured to send an SRS based on the configuration information of the SRS port by using the transceiver module 1602.

In addition, the foregoing modules may be further configured to support another process performed by the first terminal device in embodiments shown in FIG. 5 to FIG. 15 and any implementation thereof. For beneficial effects, refer to the foregoing descriptions. Details are not described herein again.

When the communication apparatus is a first network device, the transceiver module 1602 is configured to send configuration information of one or more SRS ports to a terminal device, where the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different. The processing module 1601 is configured to receive, based on the configuration information of the SRS port by using the transceiver module 1602, an SRS sent by the terminal device.

In addition, the foregoing modules may be further configured to support another process performed by the first network device in embodiments shown in FIG. 5 to FIG. 15 and any implementation thereof. For beneficial effects, refer to the foregoing descriptions. Details are not described herein again.

When the communication apparatus is a second network device, the transceiver module 1602 is configured to receive configuration information that is of one or more SRS ports of a first terminal device and that is sent by a first network device, where the first network device is a serving network device of the first terminal device, the second network device is a cooperative network device of the first terminal device, the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different. The processing module 1601 is configured to configure, based on the configuration information of the SRS port, configuration information of an SRS port for a second terminal device.

In addition, the foregoing modules may be further configured to support another process performed by the second network device in embodiments shown in FIG. 5 to FIG. 15 and any implementation thereof. For beneficial effects, refer to the foregoing descriptions. Details are not described herein again.

FIG. 17 is a diagram of another communication apparatus according to an embodiment of this application. The communication apparatus includes a processor 1701 shown in FIG. 17 and a communication interface 1702 connected to the processor 1701.

The processor 1701 may be a general-purpose processor, a microprocessor, an application-specific integrated circuit (application-specific integrated circuit, ASIC), a field programmable gate array (field programmable gate array, FPGA) or another programmable logic device, a discrete gate or a transistor logic device, or one or more integrated circuits configured to control program execution of the solutions in this application. The general-purpose processor may be a microprocessor, any conventional processor, or the like. The steps of the method disclosed with reference to embodiments of this application may be directly performed and completed by a hardware processor, or may be performed and completed by a combination of hardware and software modules in the processor.

The communication interface 1702 is configured to communicate with another device or communication network by using any transceiver-type apparatus.

In this embodiment of this application, the processor 1701 is configured to: invoke the communication interface 1702 to perform a receiving and/or sending function, and perform the SRS transmission method according to any one of the foregoing possible implementations.

Further, the communication apparatus may further include a memory 1703 and a communication bus 1704.

The memory 1703 is configured to store program instructions and/or data, so that the processor 1701 invokes the instructions and/or the data stored in the memory 1703, to implement the foregoing functions of the processor 1701. The memory 1703 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM) or any other medium that can be used to carry or store expected program code in a form of instructions or a data structure and that can be accessed by a computer, but is not limited thereto. The memory 1703 may exist independently, for example, an off-chip memory, and is connected to the processor 1701 through the communication bus 1704. The memory 1703 may alternatively be integrated with the processor 1701.

The communication bus 1704 may include a path for transferring information between the foregoing components.

When the communication apparatus is a first terminal device, through the communication interface 1702, the processor 1701 receives configuration information of one or more SRS ports, where the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and sends an SRS based on the configuration information of the SRS port.

In addition, the foregoing modules may be further configured to support another process performed by the first terminal device in embodiments shown in FIG. 5 to FIG. 15 and any implementation thereof. For beneficial effects, refer to the foregoing descriptions. Details are not described herein again.

When the communication apparatus is a first network device, through the communication interface 1702, the processor 1701 sends configuration information of one or more SRS ports to a terminal device, where the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and receives, based on the configuration information of the SRS port, an SRS sent by the terminal device.

In addition, the foregoing modules may be further configured to support another process performed by the first network device in embodiments shown in FIG. 5 to FIG. 15 and any implementation thereof. For beneficial effects, refer to the foregoing descriptions. Details are not described herein again.

When the communication apparatus is a second network device, through the communication interface 1702, the processor 1701 receives configuration information that is of one or more SRS ports of a first terminal device and that is sent by a first network device, where the first network device is a serving network device of the first terminal device, the second network device is a cooperative network device of the first terminal device, the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and configures, based on the configuration information of the SRS port, configuration information of an SRS port for a second terminal device.

In addition, the foregoing modules may be further configured to support another process performed by the second network device in embodiments shown in FIG. 5 to FIG. 15 and any implementation thereof. For beneficial effects, refer to the foregoing descriptions. Details are not described herein again.

Based on a same technical concept, an embodiment of this application further provides a computer-readable storage medium. The computer-readable storage medium stores computer-readable instructions, and when the computer-readable instructions are run on a computer, the SRS transmission according to any one of the foregoing possible implementations is performed.

Based on a same technical concept, an embodiment of this application provides a computer program product including instructions. When the computer program product runs on a computer, the SRS transmission according to any one of the foregoing possible implementations is performed.

Based on a same technical concept, an embodiment of this application further provides a chip system. The chip system includes a processor, may further include a memory, and is configured to implement the method in the foregoing method embodiments and any implementation. The chip system may include a chip, or may include a chip and another discrete component.

The term "and/or" in descriptions in embodiments of this application describes an association relationship between associated objects and indicates that three relationships may exist. For example, A and/or B may indicate the following three cases: Only A exists, both A and B exist, and only B exists. "A plurality of" in this application means two or more.

In addition, it should be understood that, in descriptions of this application, terms such as "first" and "second" are merely used for distinguishing and description, but should not be understood as an indication or implication of relative importance, or an indication or implication of a sequence. Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "comprise", "include", "have", and their variants all mean "including, but not limited to", unless otherwise specifically emphasized in another manner.

The method steps in embodiments of this application may be implemented by hardware, or may be implemented by a processor executing software instructions. The software instructions may include a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or in any other form of storage medium known in the art. For example, a storage medium is coupled to a processor, so that the processor can read information from the storage medium and can write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in the base station or the terminal as discrete components.

All or some of the foregoing embodiments may be implemented by software, hardware, firmware, or any combination thereof. When the software is used for implementation, all or some of embodiments may be implemented in a form of a computer program product. The computer program product includes one or more computer programs or instructions. When the computer program or instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage medium of volatile and non-volatile.

In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

**Claims**

1. A sounding reference signal SRS transmission method, wherein the method comprises:

   receiving, by a terminal device, configuration information of one or more SRS ports, wherein the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and
   sending, by the terminal device, an SRS based on the configuration information of the SRS port.

2. The method according to claim 1, wherein when the terminal device receives configuration information of a plurality of SRS ports, the plurality of SRS ports comprise a first SRS port set and a second SRS port set, SRS ports comprised in the first SRS port set and SRS ports comprised in the second SRS port set are respectively in one-to-one correspondence with the receive antennas of the terminal device, there is a one-to-one correspondence between the SRS ports in the first SRS port set and the SRS ports in the second SRS port set, the configuration information comprises a first transmit bandwidth corresponding to the first SRS port set and a second transmit bandwidth corresponding to the second SRS port set, and the first transmit bandwidth is different from the second transmit bandwidth.

3. The method according to claim 1 or 2, wherein the configuration information of the SRS port indicates that the SRS port uses a non-frequency hopping non-repetition mode, the sending occasions comprise a first sending occasion and a second sending occasion, a transmit bandwidth on the first sending occasion is a first bandwidth, and a transmit bandwidth on the second sending occasion is a second bandwidth, wherein the first bandwidth is less than the second bandwidth.

4. The method according to claim 1 or 2, wherein the SRS resource configuration information indicates that the SRS uses a frequency hopping mode or repetition mode, a plurality of sending occasions in one frequency hopping periodicity or repetition periodicity comprise a first sending occasion and a second sending occasion, a transmit bandwidth on the first sending occasion is a first bandwidth, and a transmit bandwidth on the second sending occasion is a second bandwidth, wherein the first bandwidth is less than the second bandwidth.

5. The method according to claim 4, wherein the first sending occasion has different relative time positions in two adjacent frequency hopping periodicities or repetition periodicities; or
the first sending occasion has a same relative time position but different frequency domain positions in two adjacent frequency hopping periodicities or repetition periodicities.

6. The method according to claim 2, wherein the first SRS port set and the second SRS port set comprise a same quantity of SRS ports, and a $Ki^{th}$ SRS port in the first SRS port set and a $Ki^{th}$ SRS port in the second SRS port set correspond to a same receive antenna.

7. A sounding reference signal transmission method, wherein the method comprises:

sending, by a first network device, configuration information of one or more SRS ports to a terminal device, wherein the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and
receiving, by the first network device based on the configuration information of the SRS port, an SRS sent by the terminal device.

8. The method according to claim 7, wherein when the first network device sends configuration information of a plurality of SRS ports to the terminal device, the plurality of SRS ports comprise a first SRS port set and a second SRS port set, SRS ports comprised in the first SRS port set and SRS ports comprised in the second SRS port set are respectively in one-to-one correspondence with the receive antennas of the terminal device, there is a one-to-one correspondence between the SRS ports in the first SRS port set and the SRS ports in the second SRS port set, the configuration information further comprises transmit bandwidths respectively corresponding to the first SRS port set and the second SRS port set, and the transmit bandwidth corresponding to the first SRS port set is different from the transmit bandwidth corresponding to the second SRS port set.

9. The method according to claim 7 or 8, wherein the SRS resource configuration information indicates that the SRS port uses a non-frequency hopping non-repetition mode, the sending occasions comprise a first sending occasion and a second sending occasion, a transmit bandwidth on the first sending occasion is a first bandwidth, and a transmit bandwidth on the second sending occasion is a second bandwidth, wherein the first bandwidth is less than the second bandwidth.

10. The method according to claim 7 or 8, wherein the SRS resource configuration information indicates that the SRS uses a frequency hopping mode or repetition mode, a plurality of sending occasions in one frequency hopping periodicity or repetition periodicity comprise a first sending occasion and a second sending occasion, a transmit bandwidth on the first sending occasion is a first bandwidth, and a transmit bandwidth on the second sending occasion is a second bandwidth, wherein the first bandwidth is less than the second bandwidth.

11. The method according to claim 10, wherein the first sending occasion has different relative time positions in two adjacent frequency hopping periodicities or repetition periodicities; or
the first sending occasion has a same relative time position but different frequency domain positions in two adjacent frequency hopping periodicities or repetition periodicities.

12. The method according to claim 8, wherein the first SRS port set and the second SRS port set comprise a same quantity of SRS ports, and a $Ki^{th}$ SRS port in the first SRS port set and a $Ki^{th}$ SRS port in the second SRS port set correspond to a same receive antenna.

13. The method according to any one of claims 7 to 12, wherein the method further comprises:
sending, by the first network device, the configuration information of the one or more SRS ports to a second network device, wherein the second network device is a cooperative network device of the terminal device.

14. A sounding reference signal transmission method, wherein the method comprises:

receiving, by a second network device, configuration information that is of one or more SRS ports of a first terminal device and that is sent by a first network device, wherein the first network device is a serving network device of the first terminal device, the second network device is a cooperative network device of the first terminal device, the configuration information indicates sending occasions corresponding to the one or more SRS ports, the SRS ports are in one-to-one correspondence with receive antennas of the terminal device, and SRS transmit bandwidths corresponding to at least two of sending occasions of each SRS port are different; and configuring, by the second network device based on the configuration information of the SRS port, configuration information of an SRS port for a second terminal device.

15. A communication apparatus, wherein the communication apparatus comprises a processor, and a memory and a communication interface that are separately coupled to the processor; the communication interface is configured to communicate with another device; and the processor is configured to: run instructions or a program in the memory, and perform, through the communication interface, the method according to any one of claims 1 to 14.

16. A computer-readable storage medium, wherein the computer-readable storage medium stores instructions, and when the instructions are run on a computer, the computer is enabled to perform the method according to any one of claims 1 to 14.

FIG. 1

FIG. 2

FIG. 3

FIG. 4

```
┌──────────────┐                                      ┌──────────────┐
│ First terminal│                                     │ First network │
│    device    │                                      │    device    │
└──────┬───────┘                                      └──────┬───────┘
       │                                                     │
       │   501: Configuration information of one or more     │
       │   SRS ports (indicating a sending occasion          │
       │   corresponding to the SRS port, where the SRS      │
       │   ports are in one-to-one correspondence with       │
       │   receive antennas of the first terminal device, and│
       │   SRS transmit bandwidths corresponding to at       │
       │   least two of sending occasions of each SRS port   │
       │<─────────────────are different)─────────────────────│
       │                                                     │
       │     502: Send an SRS based on the configuration     │
       │       information of the one or more SRS ports      │
       │────────────────────────────────────────────────────>│
       │                                                     │
```

FIG. 5

(a)                                         (b)

FIG. 6

FIG. 7

FIG. 8

FIG. 9

EP 4 510 668 A1

EP 4 510 668 A1

Sending occasion 1　Sending occasion 2　Sending occasion 3　Sending occasion 4　Sending occasion 5　Sending occasion 6　Sending occasion 7　Sending occasion 8

Moment 1　Moment 2　Moment 3　Moment 4　Moment 5　Moment 6　Moment 7　Moment 8

First sending occasion

Second sending occasion

FIG. 10

FIG. 11

Sending occasion
corresponding to a
first SRS port set

(a)

Sending occasion
corresponding to a
second SRS port set

(b)

FIG. 12

(a)

(b)

Sending occasion corresponding to a first SRS port set

Sending occasion corresponding to a second SRS port set

FIG. 13

| | Moment 1 | Moment 2 | Moment 3 | Moment 4 | Moment 5 | Moment 6 | Moment 7 | Moment 8 |

(a)

(a)

FIG. 14

TRP 1

TRP 2

Favorable occasions for the TRP 1 and the TRP 2 to receive an SRS sent by the UE 1

UE 1

UE 2

2P    2P    2P    2P

P    P    P    P

Moment Moment Moment Moment Moment Moment Moment Moment
1        2        3        4        5        6        7        8
P                 P        P                          P

Moment Moment Moment Moment Moment Moment Moment Moment
1        2        3        4        5        6        7        8
2P                2P       2P                         2P

UE 1

UE 2

TRP 1

TRP 2

Favorable occasions for the TRP 1 and the TRP 2 to receive an SRS sent by the UE 2

FIG. 15

EP 4 510 668 A1

1601 1602

| Processing module | — | Transceiver module |

FIG. 16

1701

Communication apparatus

| Processor |

| Memory | | Communication interface |

1704

1703 1702

FIG. 17

## INTERNATIONAL SEARCH REPORT

| | International application No. |
|---|---|
| | **PCT/CN2023/089213** |

| **A.** | **CLASSIFICATION OF SUBJECT MATTER** |
|---|---|

H04W 16/06(2009.01)i; H04W72/04(2023.01)i

According to International Patent Classification (IPC) or to both national classification and IPC

| **B.** | **FIELDS SEARCHED** |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXT, WPABS, CNKI, 3GPP: 信道探测参考信号, SRS, 配置, 时机, 时段, 不同, 带宽, 频带, 频率, 频段, 干扰, 天线, 端口, 跳频, 重复, 周期, 协作, 协同, configuration, slot, period, different, bandwidth, frequency, band, interference, antenna?, port?, hopping, repetition, coordination

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | US 2018183552 A1 (QUALCOMM INC.) 28 June 2018 (2018-06-28)<br>description, paragraphs 0068-0127, and figures 2-14 | 1-16 |
| X | WO 2022046316 A1 (QUALCOMM INC.) 03 March 2022 (2022-03-03)<br>description, paragraphs 0081-0121, and figures 4-10 | 1-16 |
| X | US 2013039319 A1 (CHINA MOBILE COMMUNICATIONS CORP.) 14 February 2013 (2013-02-14)<br>description, paragraphs 0021-0053 and 0137-0139, and figures 2-3 and 7 | 1-16 |
| X | US 2021127358 A1 (SAMSUNG ELECTRONICS CO., LTD.) 29 April 2021 (2021-04-29)<br>description, paragraphs 0083-0124, and figure 7 | 1-16 |
| A | KR 20220021175 A (LG UPLUS CORP.) 22 February 2022 (2022-02-22)<br>entire document | 1-16 |
| A | QUALCOMM INC. "R1-1811656 Additional SRS symbols"<br>*3GPP TSG-RAN WG1 #94bis*, 12 October 2018 (2018-10-12),<br>entire document | 1-16 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 July 2023** | **19 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/089213**

| Patent document cited in search report | | | Publication date (day/month/year) | Patent family member(s) | | | Publication date (day/month/year) |
|---|---|---|---|---|---|---|---|
| US | 2018183552 | A1 | 28 June 2018 | US | 2021376980 | A1 | 02 December 2021 |
| | | | | EP | 4044492 | A1 | 17 August 2022 |
| | | | | ES | 2908943 | T3 | 04 May 2022 |
| | | | | US | 2019394002 | A1 | 26 December 2019 |
| | | | | US | 11063720 | B2 | 13 July 2021 |
| | | | | WO | 2018118532 | A1 | 28 June 2018 |
| | | | | TW | 202201923 | A | 01 January 2022 |
| | | | | US | 10425205 | B2 | 24 September 2019 |
| | | | | EP | 3560130 | A1 | 30 October 2019 |
| | | | | EP | 3560130 | B1 | 23 February 2022 |
| | | | | TW | 202249457 | A | 16 December 2022 |
| | | | | TW | 201828633 | A | 01 August 2018 |
| | | | | CN | 113890713 | A | 04 January 2022 |
| | | | | CN | 110089065 | A | 02 August 2019 |
| WO | 2022046316 | A1 | 03 March 2022 | | None | | |
| US | 2013039319 | A1 | 14 February 2013 | WO | 2011131127 | A1 | 27 October 2011 |
| | | | | US | 8917687 | B2 | 23 December 2014 |
| | | | | CN | 102237926 | A | 09 November 2011 |
| | | | | CN | 102244557 | A | 16 November 2011 |
| US | 2021127358 | A1 | 29 April 2021 | EP | 3556164 | A1 | 23 October 2019 |
| | | | | EP | 3556164 | A4 | 25 December 2019 |
| | | | | EP | 3556164 | B1 | 02 March 2022 |
| | | | | WO | 2018128446 | A1 | 12 July 2018 |
| | | | | RU | 2732508 | C1 | 18 September 2020 |
| | | | | US | 11297598 | B2 | 05 April 2022 |
| | | | | KR | 20190095932 | A | 16 August 2019 |
| | | | | KR | 102299263 | B1 | 07 September 2021 |
| | | | | CN | 108282303 | A | 13 July 2018 |
| KR | 20220021175 | A | 22 February 2022 | KR | 102402857 | B1 | 26 May 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210476538